# EUROPEAN PATENT APPLICATION

(11) **EP 2 708 808 A1**
(43) Date of publication of application: **19.03.2014**
(21) Application number: 12184457.5
(22) Date of filing: 14.09.2012
(51) Int. Cl.: F21V 8/00, G02B 6/00, G02B 27/09

(54) **Optical system for use in a traffic light luminaire**

(71) Applicant: Thales Deutschland GmbH, 70435 Stuttgart (DE)
(72) Inventor: Larat, Christian, 75006 Paris (FR); Kiefer, Thomas, 71229 Leonberg (DE); Warmuth, Alfred, 74389 Cleebronn (DE); Joestingmeier, Horst, 70806 Kornwestheim (DE); Bellomonte, Giuseppe, 92120 Montrouge (FR); Delboulbe Fortas, Anne, 91440 Bures-sur-Yvette (FR); Czarny, Romain, 92320 Chatillon (FR); Loiseaux, Brigitte, 91440 Bures / Yvette (FR)
(74) Representative: Kohler Schmid Möbus

(57) **Abstract**

An optical system for use in a traffic light luminaire, comprising at least two solid state light sources for generating light and a light distribution device for distributing light incident onto the light distribution device with a specified angular luminous intensity distribution. The optical system comprises a light homogenising device including an optical waveguide for interreflecting light inside the optical waveguide, wherein the light enters the optical waveguide through an input area and exits the optical waveguide through an output area. The light generated by the at least two solid state light sources is incident onto the input area of the optical waveguide and the light exiting the light homogenising device is incident onto the light distribution device. The optical system emits a light distribution which is nearly independent of the number and the optical properties of the light sources used.

## Description

### Background of the invention

The invention relates to an optical system for use in a traffic light luminaire, comprising at least two solid state light sources for generating light and a light distribution device for distributing light incident onto the light distribution device with a specified angular luminous intensity distribution.

Such optical systems are known from the Thales "FieldTrac 6365 LED-Signal" described in the "FieldTrac 6365 LED-Signal" product brochure.

The "FieldTrac 6365 LED-Signal" is a railway traffic light luminaire available in different light colours (red, green, yellow, blue, white) and two different diameters (70 mm and 136 mm). Instead of a conventional light bulb light emitting diodes (LEDs) are used for signalling. The colour of the light emitted by the traffic light luminaire is equal to the colour of the light generated by the used type of LEDs. The properties of the generated light, especially spectral range and light intensity, can be influenced by selecting semiconductor materials and doping during production of the LEDs accordingly. Since LEDs generate quasi-monochromatic light, no additional filters are necessary. The traffic light luminaire with 70 mm diameter comprises 36 LEDs while the luminaire with 136 mm diameter comprises 144 LEDs. In both cases for each single LED in the luminaire a separate lens is used in order to shape and distribute the generated light wherein all lenses are of the same type and combined into a single light distribution device.

Unfortunately the light distribution of the LED based luminaire is not as homogeneous as the light distribution of the conventional bulb based luminaire. Especially if the luminaire is observed up to a distance of several tens of meters, the luminous surface of the luminaire is not very uniform and individual LEDs can be recognised as bright spots which leads to a "pixel" effect of the luminaire. In case some of the LEDs are defective the non uniformity of the luminous surface is even getting worse.

Further the shape and the optical properties of the light distribution device depend on the number, the type and the arrangement of the LEDs used in the optical system. Since the product life cycle of high power LEDs is rather short (only a few years) and high power LEDs themselves have a rather limited lifetime depending on its operation conditions this is a problem because for every new type of LED on the market or every new arrangement of LEDs in a traffic light luminaire a matched light distribution device has to be designed and fabricated. In case the LEDs of a luminaire have to be replaced by new types and/or in a new arrangement also the light distribution device has to be replaced. This is inefficient since the purely optical components like the light distribution device have a very long lifetime and could be used over a period of several LED generations. These circumstances make LED based traffic light luminaires expensive and their maintenance time consuming.

### Object of the invention

It is therefore the object of the invention to provide an optical system which emits a light distribution which is nearly independent of the number and the optical properties of the light sources used.

### Short description of the invention

This object is achieved by an optical system according to claim 1. The optical system according to the invention comprises a light homogenising device including an optical waveguide for interreflecting light inside the optical waveguide which enters the optical waveguide through an input area and exits the optical waveguide through an output area, wherein the light generated by the at least two solid state light sources is incident onto the input area of the optical waveguide and the light exiting the light homogenising device is incident onto the light distribution device.

Light entering through the input area of the optical waveguide is reflected on the inner surfaces of the optical waveguide. By these reflections the light is homogenised, which means that the light entering the optical waveguide through the input area with high spatial variations in luminous intensity exits the optical waveguide through the output area with very low spatial variations in luminous intensity. The relative spatial luminous intensity distribution of the light exiting the light homogenising device is nearly independent from the light sources used to generate the light incident onto the input area of the optical waveguide of the light homogenising device. Therefore the "pixel" effect known from state of the art traffic light luminaires does not appear if the inventive optical system is used. If necessary, an even more homogenous angular distribution of the light exiting the light homogenising device can be achieved by the use of an optical diffuser. Therefore the solid state light sources can be replaced by different types having different optical parameters without the need to replace the light distribution device and/or the light homogenising device. The optical system can be easily adapted to the development of solid state light sources with different optical parameters like light output power, light colour and angular luminous distribution by simply replacing the solid state light sources. This saves a considerable amount of cost and time during production and maintenance of the inventive optical system. In case some of the solid state light sources are defective the overall luminous intensity drops but the relative angular luminous intensity distribution of the luminaire stays the same.

### Preferred embodiments of the invention

In a preferred embodiment of the invention at least two solid state light sources are light emitting diodes and/or laser diodes, in particular emitting light of different colours. Light emitting diodes are available in a plurality of different types emitting different light colours at low prices and high luminous intensities while laser diodes have superior optical properties like a low beam divergence and a small emitting wavelength band. In principle the optical system can be operated with only one type of LED. However if LEDs with at least two different emitting wavelengths, that is to say light colours are used together in the optical system, light colours can be emitted which are not available by using only one particular type of LEDs. By the use of the inventive light homogenising device the different light colours can be spatially mixed and a light colour different to the light colour of the at least two types of LEDs used exits the light homogenising device. With the inventive optical system especially certain green light colours like the bluish green for railway signals according to DIN 6163-4, which is requested for example by the Deutsche Bahn AG, can be reliably generated by the use of at least two types of conventional LEDs. Also specific yellow colours can be easily generated by the use of more than one type of LED. By proper selection of the solid state light sources this embodiment of the inventive optical system can display many different light colours and therefore one optical system can replace several optical systems according to the state of the art, which are only able to display one specific light colour each.

Another preferred embodiment is characterised in that the optical system further comprises a light collection device, wherein the light collection device comprises at least one optical component to direct the light generated by the at least two solid state light sources to the input area of the optical waveguide of the light homogenising device. By using the light collection device the light generated by the solid state light sources can be focused onto the input area of the optical waveguide of the homogenising device. Therefore, light losses occurring between the light sources and the input area of the optical waveguide can be minimised which increases the overall efficiency of the optical system. Further, by using the light collection device, a higher number of solid state light sources can be optically connected to the input area (which is limited in size) compared to the number that could be positioned directly onto the input area of the optical waveguide. As a consequence the solid state light sources need not to be arranged in the same shape as the shape of the input area of the optical waveguide. Due to the guiding of the light from the light sources to the input area there is an increased degree of freedom in the arrangement of the solid state light sources in the optical system. For example they can be positioned distant to the input area of the optical waveguide in order to simplify electrical connection, thermal management and maintenance.

A further preferred development of the above mentioned embodiment is characterised in that the light collection device comprises a plurality of optical fibres, wherein each optical fibre is optically connected with a first end to one of the at least two solid state light sources and with a second end to the input area of the optical waveguide of the light homogenising device. Because optical fibres are flexible up to a certain degree the physical arrangement between the solid state light sources and the light homogenising device has not to be fixed. Therefore the physical arrangement can be changed without interrupting the optical connection between the solid state light sources and the light homogenising device even during operation of the optical system. Also a readjustment of the light collection device after changing the position of the solid state light sources or the light homogenising device is not necessary. For example, if maintenance work on the optical system has to be done, a printed circuit board with the mounted solid state light sources can be repositioned to gain access to all circuits without interrupting the optical connection or the need to readjust the set up of the light collection device. Optical fibres can be made of different materials, like glass or plastic, have low losses, are available in small diameters, and have mechanical properties comparable to electrical wires. Therefore, flexible and reliable optical connections with a length up to some tens of meters between the solid state light sources and the input area of the optical waveguide of the light homogenising device can be inexpensively established by using a cable with a sufficient number of optical fibres. Further the optical fibres can be easily arranged in a way that the cross-section of the core of each fibre meets the input area of the optical waveguide of the light homogenising device in order to couple as much light as possible into the input area of the optical waveguide.

In another preferred embodiment the shape of the optical waveguide is configured such that the most divergent portion of the light generated by each of the at least two solid state light sources entering the optical waveguide through the input area is reflected inside the optical waveguide a minimum number of times, in particular at least one time, most preferably at least five times, before it exits the optical waveguide through the output area. To operate as a light homogenising device the most divergent portion of the light entering the optical waveguide should be reflected said minimum number of times. A high number of reflections of the most divergent beam incident onto the input area of the optical waveguide of the light homogenising device results in light with extremely low spatial variations in luminous intensity exiting the light homogenising device. So, even in case only a few high power solid state light sources are used to generate light and/or only a few light sources of the optical system are in operation, a light beam exits the light homogenising device which looks very uniform and homogenous to the observer.

Highly preferred is an embodiment of the inventive optical system characterised in that the light homogenising device comprises at least one optical diffuser placed at the output area of the optical waveguide. The optical diffuser ensures a further improved uniform angular distribution of the light exiting the output area of the optical waveguide. Due to the uniform angular distribution no optical imaging of the light distribution entering through the input area of the optical waveguide can be observed at any distance in the light exiting the light homogenising device. The use of additional optical diffusers is also possible in order to improve the angular distribution even more.

A preferred development of the above mentioned embodiment is characterised in that the optical waveguide is a solid waveguide and that the optical diffuser is realised by a roughened surface of the output area of the optical waveguide. Solid optical waveguides can be easily made from glass or plastics. Since the optical diffuser is realised by roughening the output surface of the optical waveguide it is perfectly positioned and aligned at the output area with no distance in between and no additional optical component as diffusing element is necessary in the inventive optical system. Instead of solid waveguides, hollow waveguides can also be used for the light homogenising device.

Highly preferred is an embodiment of the inventive optical system characterised in that the optical waveguide of the light homogenising device is an elongated planar or tapered optical waveguide, in particular having a rectangular cross-section, wherein the input area is located at a first longitudinal end and the output area is located at a second longitudinal end of the optical waveguide. Elongated planar or tapered waveguides with a rectangular cross-section can be easily and inexpensively fabricated. In case of a tapered waveguide the input area and the output area of the waveguide have different in sizes. This is advantageous in case a small output area of the waveguide is requested while compared to the size of the output area a larger input area is needed in order to couple as much light as possible into the input area. Therefore by using an optical waveguide with a varying cross-section an additional degree of freedom regarding the shape and size of the input area and the output area is available.

A further preferred development of the above mentioned embodiment is characterised in that the output area of the optical waveguide of the light homogenising device has the shape of a specified beam cross-section, in particular to replicate the shape of a light bulb filament. Therefore a conventional optical system can be updated to the inventive optical system by replacing the light source used so far with a light homogenising device comprising an optical waveguide, the associated solid state light sources and, if necessary, a light collection device. If the optical waveguide has an output area which equals in shape the light emission area of the light source used so far, and which has a size equal or larger than the size of the light emission area of the light source used so far, and if the output area is positioned at the same location as the emission area of the light source used so far, the shape of the emission area stays the same and there is no need to replace any of the subsequent parts of the optical system. In addition the output area should exhibit the same luminance (Cd/m²) as the light source used so far. Especially the light distribution device has not to be replaced and can be reused. This saves a considerable amount of money and time during an update of the traffic light luminaire. Since most conventional traffic light luminaires comprise optical systems which use light bulbs for generating light the output area of the optical waveguide advantageously replicates the shape of a light bulb filament of a light bulb used in traffic light luminaires.

Also preferred is an embodiment of the inventive optical system characterised in that the optical waveguide of the light homogenising device is an optical fibre, wherein the input area is an end face at a first tail end and the output area is an end face at a second tail end of the optical fibre. Optical multimode fibres are suited to be used as optical waveguide in the light homogenising device since they are inexpensive and have low losses. By using an optical fibre with a length of up to some tens of meters a sufficient number of reflections on the inner surface of the fibre can be achieved to avoid optical imaging of the light distribution entering through the end face at the first tail end of the optical fibre as explained previously. Since optical fibres are flexible they can be furled onto a coil in order to save space.

Further preferred is an embodiment of the optical system characterised in that the at least two solid state light sources are arranged in a first cabinet and the light distribution device is arranged in a second cabinet which is spatially separated from the first cabinet, wherein an optical connection between the first cabinet and the second cabinet is established by at least one optical fibre. Advantageously the optical connection between the first and the second cabinet can be realised by using a light collection device comprising a plurality of optical fibres or by using a light homogenising device, wherein the optical waveguide is a single optical fibre. By using the first cabinet for the solid state light sources and the second cabinet for the light distribution device a purely optical part of the system can be spatially separated from a light generating part. Since optical fibres have low losses the two cabinets can be located at a distance up to some tens of meters. Therefore it is possible to arrange the purely optical part of the system in a housing mounted on the head of a railway traffic light signal while the light generating part is located at the ground away from the traffic light signal to provide easy access for maintenance. In addition the light generating parts of more than one luminaire can be placed in the same cabinet which saves space and costs.

Also preferred is an embodiment of the inventive optical system characterised in that the light distribution device comprises a collimating system to collimate the light exiting the light homogenising device and a zoned distributor or a Fresnel lens or a micro structured optical plate. The collimating system collimates and magnifies the beam exiting the light homogenising device to a required size. By using a zoned distributor or a Fresnel lens or a micro structured optical plate the light can be distributed with a desired angular luminous intensity distribution.

In a highly preferred embodiment of the inventive optical system a further solid state light source is provided, the further solid state light source generating invisible radiation, in particular infrared radiation, and the optical system comprises at least one optical component which absorbs the invisible radiation generated by the further solid state light source. Due to the absorption of the invisible radiation some optical components of the inventive optical system can be heated to a certain amount. Therefore the surface of the heated elements cannot grow damp with water or ice which increases the overall reliability of the optical system even under extreme environmental conditions. In general, the optical power of the invisible radiation emitted by the solid state light source has to be as high as to prevent that the heated elements grow damp with water or ice. Preferably the optical power is in the range of a few watts.

Further within the scope of the invention is a traffic light luminaire comprising an optical system, as described above. The inventive traffic light luminaire has low maintenance costs. In case the solid state light sources are defective or outdated and need to be replaced only the sources itself need to be replaced. The remaining part of the system can be left untouched. Further in case more than one different type of solid state light source is used the traffic light luminaire is able to display different signal states, for example "stop" and "go", by emitting different light colours, for example a red and a green light colour. In case the solid state light sources are located in a separate cabinet the size of the purely optical part of the luminaire can be advantageously very small which simplifies the mounting procedure on a traffic light signal. If the output area of the optical waveguide of the light homogenising device is appropriately designed, optical components from conventional light bulb based luminaires can be reused.

A preferred development of the inventive traffic light luminaire is characterised in that a control device being adapted to simultaneously operate the solid state light sources and at least one light detector are provided to establish an optical feedback loop, the at least one light detector being arranged for detecting light at least at one specific location within the optical system, in particular being arranged to detect light exiting the light homogenising device or the light distribution device, and the control device being adapted to maintain a predetermined luminous intensity and/or colour of the detected light. The preferred development of the inventive traffic light luminaire has a very high stability regarding the overall luminous intensity and/or light colour. In case only solid state light sources emitting one particular wavelength (or wavelength band) are used, it is sufficient to maintain the overall luminous intensity of the traffic light luminaire at a predetermined level. The light output of the luminaire is independent to variations in the luminous intensities of the used solid state light sources and to variations in the optical transmissibility of the optical components of the optical system of the inventive traffic light luminaire. To a certain amount the traffic light luminaire is also fault tolerant: If some solid state light sources become defective, the light output of the remaining light sources can be increased to compensate for the defective devices.

Also within the scope of the invention is a traffic light, in particular a railway traffic light, comprising at least one inventive traffic light luminaire. The inventive traffic light is very easy and inexpensive to maintain in case solid state light sources have to be replaced. In addition it is very reliable in terms of optical signal quality.

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

### Drawings

The invention is shown in the drawings.
- FIG. 1: shows schematically an optical system according to the invention;
- FIG. 2: shows a cross-sectional view of optical fibres of a light collection device arranged in a square array adjoining an optical waveguide of a light homogenising device;
- FIG. 3: shows a cross-sectional view of optical fibres of a light collection device arranged in a triangular array adjoining an optical waveguide of a light homogenising device;
- FIG. 4: shows an optical system segmented into two cabinets, wherein the cabinets are optically connected by optical fibres of a light collection device;
- FIG. 5: shows an optical system segmented into two cabinets, wherein the cabinets are optically connected by an optical fibre of a light homogenising device.

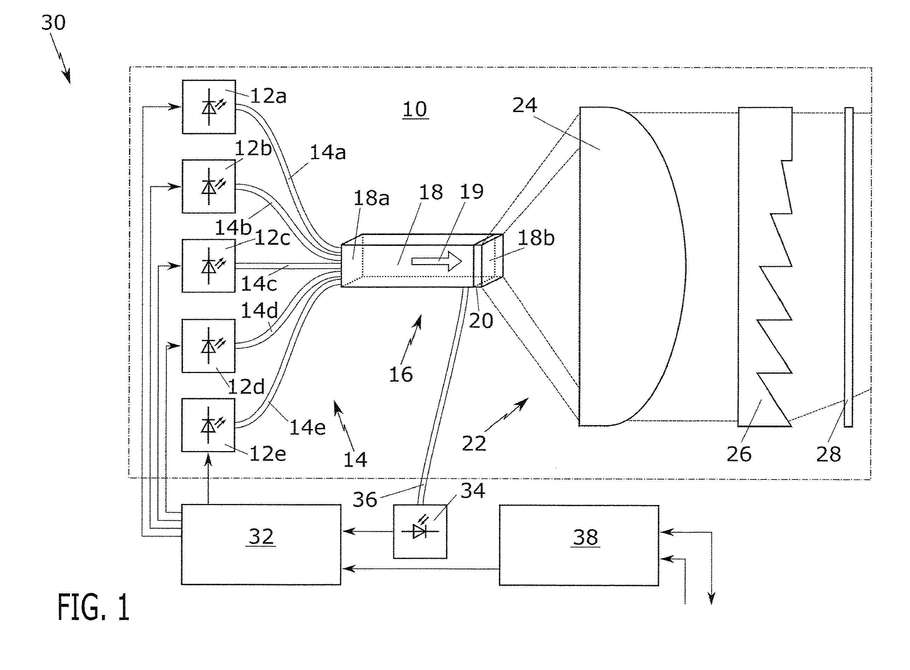

**FIG. 1** shows an inventive optical system **10** comprising five light emitting diodes **12a-12e,** a light collection device **14** comprising five optical fibres **14a-14e,** a light homogenising device **16** comprising an optical waveguide **18** and an optical diffuser **20,** and a light distribution device **22** comprising a collimating and magnifying lens **24,** a zoned distributor **26** and a protective window **28.** The optical system 10 is part of a traffic light luminaire **30** for use in traffic light signals. In addition to the optical system 10 the traffic light luminaire 30 further comprises a driver and control circuit **32** for driving the light emitting diodes 12a-12e, a photo detector **34** optically connected to the optical waveguide 18 of the light homogenising device 16 by means of an optical fibre **36,** and a supply and communication circuit **38.** The term "optically connected" means that light radiated by an optical component, for example a solid state light source, is directed to a designated optical component, for example a light distribution device, and irradiated onto that component.

In the embodiment of the inventive optical system 10 shown in FIG. 1 light is generated by using the five light emitting diodes (LEDs) 12a-12e emitting different light colours. The LED 12a is emitting a red light colour, the LED 12b is emitting a green light colour and the LEDs 12c and 12d are emitting a blue light colour. Finally the LED 12e is emitting invisible infrared radiation and its purpose will be explained later in the description. Besides LEDs any other type of solid state light sources, like laser diodes or organic light emitting diodes, in any combination can be used in accordance with the invention. The solid state light sources used in the invention can comprise different types having different luminous intensities and/or generating different light colours, that is to say having different emission spectra, or they can all be of the same type. In case solid state light sources with high luminous intensities are used, only a few light sources may be sufficient to operate a traffic light luminaire within a required minimum luminous intensity specification (minimum number of required light sources). If a traffic light luminaire has to meet a certain level of reliability, for example a specified safety integrity level according to the IEC 61508/IEC 61511 specification, a higher number of solid state light sources compared to the minimum number of required light sources can be used in the optical system. Thus, in case the luminous intensity of some of the solid state light sources drops due to aging or some solid state light sources become defective, the loss in the overall luminous intensity can be compensated for. In a first alternative the minimum number of solid state light sources is operated at a nominal value while a number of spare solid state light sources are out of operation. If the overall luminous intensity undershoots the required minimum value a sufficient number of spare solid state light sources are put into operation in order to meet the overall required minimum luminous intensity value. In a second alternative the minimum number and the additional number of spare solid state light sources are operated at a level below the nominal value. If the overall luminous intensity undershoots the required minimum value the luminous intensities of one or a plurality of solid state light sources can be increased until the overall required minimum luminous intensity value is met. In addition a combination of the first and the second alternative is also possible.

In FIG. 1 the LEDs 12a-12d have different visible light colours. Since the generated light of the LEDs 12a-12d is mixed, i.e. spatially superimposed in the light homogenising device 16, within a certain range arbitrary light colours can be displayed by the optical system 10. This is advantageous because not all signal light colours can be reproduced by only using one particular type of LED available on the market. For example, light colours in the blue green or the yellow region can be hardly generated by using only a single type of LED. Binning, i.e. preselecting LEDs according to their exact light colour alleviates that problem in case of the blue green light colour, but makes the binned LEDs more expensive. By setting the relative luminous intensity output of the LEDs 12a-12d in FIG. 1 independently, a desired light colour can be mixed and distributed by the optical system 10. For example, if the relative luminous intensity of the red light colour LED 12a is set to 0.0, the relative luminous intensity of the green light colour LED 12b is set to 0.4 and the relative luminous intensities of the blue light colour LEDs 12c and 12d are set to 0.7 the blue green light colour mentioned above is distributed by the optical system 10. The inventive optical system 10 can display arbitrary light colours within a certain range determined by the number and type of the solid state light sources used. Therefore, with the inventive optical system 10 it is possible to display many different light colours, e.g. for different signal states, for example a red, a yellow, a green, a white and a blue signal state.

The LEDs 12a-12e shown in FIG. 1 are of the SMD (surface mounted device) type and are all mounted on the same printed circuit board. This simplifies thermal management of the LEDs°12a-12e. For example, by placing the printed circuit board with its back side onto a heatsink or a cooling system, all heat dissipating LEDs 12a-12e are thermally coupled and can be effectively cooled. This makes fabrication less expensive, maintenance more easy and the traffic light luminaire 30 more reliable. If the printed circuit board is defective, it can be replaced by a spare part without the need to find the exact location of the defect on the board. The operation of the traffic light luminaire 30 can be restarted very quickly and the defective printed circuit board can be taken to a closer analysis into a repair shop. In addition also other parts of the luminaire 30 like the driver and control circuit 32 and/or the supply and communication circuit 38 can be integrated onto the same printed circuit board.

The light collection device 14 comprises five optical fibres 14a-14e. Each optical fibre is placed with a first tail end as close as possible to the light emitting surface of a dedicated LED. For example the first tail end of the optical fibre 14a is adjoined to the emitting surface of the LED 12a. By means of these optical connections between the LEDs 12a-12e and the optical fibres 14a-14e the generated light is collected and can be directed to the light homogenising device 16. In case the light collection device 14 comprises more optical fibres than light sources are available, some of the optical fibres can be left unconnected. The cross-sectional dimensions of the core of each optical fibre 14a-14e should match or exceed the dimensions of the emitting surface of the corresponding solid state light source 12a-12e in order to keep light losses low. For high power light sources typically multimode fibres with a core diameter between 100 µm and 2000 µm are used. In order to minimize light losses, the optical coupling between a light source and its corresponding optical fibre can be improved by polishing the first tail end of the fibre. In addition, matched intermediate optics can be inserted between the solid state light sources and the corresponding optical fibres. Such intermediate optics can comprise a combination of lenses and/or mirrors. The numerical aperture of the optical fibres and the matched intermediate optics is preferably as high as possible to couple as much light as possible into the optical fibres. In case of surface mounted LEDs, small lenses made of plastics and equipped with holding fixtures which are pluggable on top of the case of the LEDs can be used as intermediate optics. Lenses for intermediate optics can also be integrated into a receptacle mounted on the LEDs which includes an additional holding fixture for an optical fibre. In case many detachable optical connections between solid state light sources and the optical fibres of the light collection device are required, one large holding fixture for all optical fibres can be used. This holding fixture can be designed as a board made for example of plastics or metal. For each optical fibre the board comprises a hole according to the diameter of the corresponding optical fibre and a holding fixture for attaching that fibre to the board. After all fibres are attached to the large holding fixture, the holding fixture itself can be attached at once to the printed circuit board comprising the mounted solid state light sources. Thereby each optical fibre is perfectly aligned on top of the emitting surface of the corresponding light source. In case the optical fibres have to be disconnected from the light sources, only the holding fixture of the printed circuit board holding the optical fibres has to be detached. Additionally intermediate optics can be included into the printed circuit board holding the optical fibres. Also beneficial is that no confusion between a specific light source and its corresponding optical fibre can occur which could result in a mismatch between core diameter of the fibre and size of the emitting area of the light source. In FIG. 1 however the rather simple method of gluing the first tail end of each optical fibre 14a-14e to the emitting surface of each LED 12a-12e was chosen for establishing the optical connection.

In FIG. 1 each optical fibre 14a-14e is optically connected with a second tail end to the light homogenising device 16. Thereto all second tail ends of the optical fibres 14a-14e are located in front of the light homogenising device 16 and arranged in a way that they fit onto the input area **18a** of the optical waveguide 18. Instead of optical fibres also other types of optical waveguides or free space optics can be used. For example the light collection device 14 can be realised by optical waveguides having a rectangular cross section which are implemented on the same printed circuit board on which the LEDs 12a-12e are mounted. Especially in case of high power solid state light sources, for example semiconductor lasers, free space optics comprising any combination of optical elements like mirrors, lenses, beam combiners, optical prisms, parallel plates and optical gratings can be used to collect the emitted light. Besides it is possible to collect and combine the light bit by bit with the help of spatial stacking. For example, in a first step the light emitted by a first light source can be combined with the light emitted by a second light source. In a second step the combined light of the first and the second light source is again combined with the light emitted by a third light source and so on. In the end a combined light beam comprising the collected light of all light sources can be focused onto the input area of the waveguide of the light homogenising device. The combination of the light can be done by using one way mirrors.

The light emitted by the LEDs 12a-12e in FIG. 1 is now coupled into the optical waveguide 18 of the light homogenising device 16. Therefore the optical fibres 14a-14e are arranged in a way that the light exiting their second tail ends is irradiated onto the input area 18a of the optical waveguide 18 and transmitted into the inside of the optical waveguide 18. The light inside the optical waveguide 18 is reflected multiple times on the inner surfaces of the optical waveguide 18 and therefore the light generated by different LEDs 12a-12e is mixed up by spatial superposition to a homogenous light beam with a uniform luminous intensity exiting through the output area **18b** of the optical waveguide 18. By selecting the size and shape of the output area 18b of the optical waveguide 18 the beam which exits the light homogenising device 16 can be shaped. In FIG. 1 LEDs 12a-12e with different light colours were used and the light exiting the output area 18b is a mixture of the light emitted by the LEDs 12a-12e. The geometry of the optical waveguide 18 and the location of its input area 18a and its output area 18b have an important influence on the uniformity of the light exiting the optical waveguide 18. The optical waveguide 18 has an elongated shape wherein the distance along the main direction **19** of propagation of the light inside the waveguide 18 determines the light homogenisation. If the distance is too short, the average number of reflections is too low and the light exiting the optical waveguide 18 has no uniform spatial light intensity and/or colour distribution. If the distance is too long, a considerable amount of light is absorbed in the optical waveguide 18 and/or transmitted through the lateral faces of the optical waveguide 18 (and is therefore lost) and the overall efficiency of the optical system 10 drops. The required length of the optical waveguide 18 depends on the divergence of the light incident onto its input area 18a (the higher the divergence the smaller is the required length of the waveguide) and its cross section (the smaller the cross-section the smaller the required length). Like in FIG. 1 the optical waveguide 18 can have a rod shape with a constant rectangular cross-section. In this case the dimensions of the cross-section have to match the required beam dimensions of the light distribution device. For a railway traffic light luminaire an optical waveguide 18 which has the dimensions 2x15x60 mm³ is highly preferred in order to be compatible with the optical system of a bulb based railway traffic light luminaire.

Besides the optical waveguide 18 in FIG. 1 optical waveguides with any other shapes and dimensions are possible. The optical waveguide can have a tapered shape i.e. a rectangular cross-section wherein the dimensions of the cross-section get smaller along the main direction 19 of propagation of the light. This can be useful in case an increased input area of the optical waveguide is required for coupling in the light of a large number of fibres of the light collection device. Also rectangular cross-sections with rounded angles or round cross-sections are possible as long as the light is reflected on the lateral faces inside the optical waveguide. In case of a round cross-section with constant diameter the optical waveguide can be realised by using a single optical fibre of sufficient length. The optical waveguide can be made of different materials. In case the optical waveguide is solid it can be made of plastics or glass with a low absorption coefficient in the interesting wavelength band. Instead of a solid waveguide also a hollow waveguide can be used. This can for example be realised by using a tube with a suitable cross section which is coated on its inside with a highly reflective layer. In this case the optical fibres can be inserted into the optical waveguide a few millimetres deep and the faces of the second tail ends of the optical fibres need not to be perfectly aligned. To avoid deposition of moisture, condensation or dust inside the hollow waveguide or even small animals moving into a new habitat, all open faces of the optical waveguide should be sealed.

In FIG. 1 close to the output area 18b of the optical waveguide 18 an optical diffuser 20 is arranged. Light which is irradiated onto the optical diffuser 20 is scattered and therefore randomly spread into different angular directions. The light exiting the optical waveguide 18 at the output area 18b is transmitted through the optical diffuser 20 and a light output beam with a uniform angular intensity distribution leaves the light homogenising device 16. In addition to the output area 18b optical diffusers can also be arranged within the optical waveguide 18 in case of a hollow waveguide. In order to realise an efficient light homogeniser, optical diffusers should not be placed close together or near the input area of the optical waveguide. If two optical diffusers are used, the necessary length of the optical waveguide can be reduced while still a homogenous luminous intensity distribution is achieved. The optical diffusers can be realised by a thin slice made of an amorphous or microcrystalline material in order to distribute the light in arbitrary angular directions. Also a thin slice made of a transparent material wherein the surface of the slice is roughened at least on one side can be used. Another way to realise an optical diffuser is roughening the surface of the output area of the optical waveguide. This is a highly preferred way since no additional optical diffuser and no positioning or alignment with regard to the output area of the optical waveguide is necessary. The diffusing surface of the optical diffuser should be protected against moisture, frost and condensation to avoid a degradation of its diffusing optical properties. This can be realised for example by sealing or indirectly heating the diffusing surface of the optical diffuser.

The light distribution device 22 in FIG. 1 comprises a collimating and magnifying lens 24, a zoned distributor 26 and a protective window 28. The beam magnifying lens 24 scales and collimates the light beam exiting the light homogenising device 16 to the final required optical dimensions. By "optical dimension" of a light beam the product between the spatial size (length, width, diameter, etc.) and the angular divergence of the beam is meant. Instead of a single magnifying lens also mirrors or any combination of lenses and mirrors can be used for magnifying and collimating the light beam. Especially if the optical system 10 is used in a traffic light luminaires 30, the output beam of the magnifying lens 24 has to meet specified requirements regarding its horizontal and vertical optical dimensions in order to be compatible with existing optical distributors of light bulb operated traffic light luminaires. For example in bulb based railway traffic light luminaires the optical dimensions have to be 138x70 mm×mrad in horizontal and 138x12 mm×mrad in vertical direction for a standard railway traffic light luminaire with a 138 mm diameter. The difference of the beam divergence in horizontal and vertical direction is related to the shape of the bulb filament of a light bulb based traffic light luminaire and is exploited by the light distributing elements to achieve the desired light distribution. In FIG. 1 the optical diffuser 20 is positioned close to the object focal plane of the magnifying lens 24.

In FIG. 1 the LED 12e is of a specific type emitting invisible radiation in the infrared wavelength band. Especially radiation in the near-infrared band with a wavelength of 0.75 µm up to 1.40 µm or in the short-wave infrared band with a wavelength of 1.40 µm up to 3.00 µm is preferred. The purpose of the LED 12e in the inventive optical system 10 is to heat up some of the optical components in order to prevent fogging or icing of their surfaces which can degrade the optical properties of the optical components of the optical system 10. The optical heating is achieved by designing the relevant optical components absorptive to infrared radiation up to a certain amount, for example by using materials which are naturally absorbent to infrared radiation or by doping the used materials with an infrared absorptive dopant. Also coating of the optical components with an infrared radiation absorptive layer is possible. Since the radiation generated by the LED 12e is not visible to the human eye the light output colour and intensity of the railway traffic light luminaire 30 is left unchanged in case some infrared radiation leaves the luminaire 30 unintentionally. In FIG. 1 the infrared LED 12e is placed on the same printed circuit board and is optically connected to the optical waveguide 18 of the light homogenising device 16 in the same way as the remaining LEDs 12a-12d. Due to this kind of optical connection an arbitrary optical component of the optical system 10 can be heated by the infrared LED 12e, for example the optical waveguide 18 and the optical diffuser 20 of the light homogenising device 16, the magnifying lens 24, the zoned distributor 26 and the protective window 28. In addition the infrared radiation is homogenised in the same way as the visible radiation and therefore a uniform heating of the optical components successive to the light homogenising device 16 is guaranteed. Alternatively infrared light sources can be placed at different locations in the optical system. In FIG. 1 especially the protective window 28 is sensitive to moisture and has to be heated under adverse environmental conditions. Therefore in FIG. 1 the LED 12e also can be placed between the light homogenising device 16 and the magnifying lens 24. Depending on the required amount of heating and the location of the component the absorptance has to be selected. Especially the protective window 28 should have a high degree of absorptance of 90 %, preferably 99 % of the incoming infrared radiation. Instead or in addition to the above described indirect heating with invisible radiation the optical system can comprise anti frost and/or anti condensation protective windows at its light output areas. These protective windows can comprise special coatings to prevent frost and condensation on their surfaces or they can be directly heated by electrical heating elements.

To maintain a specified light output colour and luminous intensity the traffic light luminaire 30 in FIG. 1 comprises the driver and control circuit 32, the photo detector 34 and the optical fibre 36. With the help of these elements an optical feedback loop is established. This feedback loop compensates for various effects otherwise influencing the light output colour and luminous intensity of the traffic light luminaire 30. This can be realised for example as presented in the European patent application with application number 12 172 424.9 (at this date unpublished). Due to ageing the luminous intensity of each LED 12a-12e drops over time which results in a change in the overall luminous intensity and/or light output colour of the traffic light luminaire 30. In addition LEDs exhibit a considerable dependence between ambient temperature and luminous intensity, especially LEDs in the yellow colour range have a very poor thermal behaviour. Secondary the optical properties of other parts of the optical system 10, like the optical fibres 14a-14e, the optical waveguide 18 and the optical diffuser 20, are dependent of lifetime, temperature and other environmental parameters. All these dependencies would lead to changes in the output colour and luminous intensity of the traffic light luminaire 30 in case no feedback loop is used. With the help of the optical fibre 36 in FIG. 1 which is adjoined with a first tail end to the optical waveguide 18 of the light homogenising device 16 near its output area 18b, scattered light lost from a lateral face of the optical waveguide 18 is directed to the photo detector 34. A second tail end of the optical fibre 36 is adjoined with the light sensitive area of the photo detector 34. In case of a hollow optical waveguide a small hole can be used to couple out a sufficient amount of light for detection. The photo detector 34 senses the luminous intensities of the various types of LEDs used in the optical system and converts them into electrical variables. These variables are now compared with preset luminous intensity values for each of the different types of LEDs and the LEDs 12a-12e are driven by the driver and control circuit 32 in such a way that the preset luminous intensity values are met. Therefore the light output of the traffic light luminaire 30 is stabilised in terms of colour and overall luminous intensity regarding the factors of influence mentioned above. In case some of the solid state light sources become defective and the optical system comprises a sufficient number of solid state light sources of the same type as the defective ones, it can be compensated for by increasing the luminous intensity of the remaining solid state light sources accordingly. By using more solid state light sources than necessary the overall reliability and safety of the inventive luminaire is increased. Another way to improve safety and reliability of the luminaire 30 is to introduce redundancy regarding the photo detector 34, the optical fibre 36 or the driver and control circuit 32. For railway traffic light applications requiring a certain safety integrity level three separate photo detectors each adjoined to a separate optical fibre are preferred. In FIG. 1 the photo detector 36 senses scattered light exiting the optical waveguide 18 through a lateral face. In other embodiments of the inventive optical system the light can be sensed at different locations, e.g. at the optical diffuser 20, in the free space between the light homogenising device 16 and the collimating and magnifying lens 24, at the collimating and magnifying lens 24 with the help of direct, lateral or reflective coupling, at the zoned distributor 26, at the protective window 28 or at any combination of these origins. It is also possible to sense the light generated by each LED 12a-12e separately by optically connecting a sufficient number of photo detectors to the LEDs 12a-12e. Although controlling the luminous intensity of the infrared LED 12e is not necessary it can be still applied in case a photo detector 34 is used which is sensitive to infrared radiation. The part of the driver and control circuit representing the optical feedback loop can also be located in a separate cabinet different to the cabinet where the remaining part of the optical system is located.

The supply and communication circuit 38 in FIG. 1 is used to supply the driver and control circuit 32 with electrical power and to communicate with a railway operator in order to change the signal state and respectively the light colour and/or intensity of the traffic light luminaire 30 by transmitting the required values to the driver and control circuit 32. To save space and production costs, the supply and communication circuit 38 can be used to operate more than one driver and control circuit 32. For example all traffic light luminaires in a traffic light signal can be powered and operated by the same supply and communication circuit.

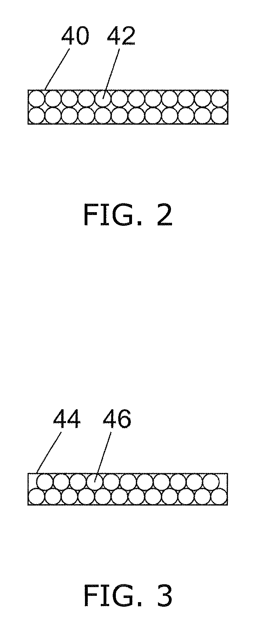

In **FIG. 2** and **FIG. 3** a cross-sectional view of optical fibres **42; 46** arranged in two different configurations is depicted. The optical fibres 42; 46 belong to a light collection device and adjoin the light input area **40; 44** of an optical waveguide of a light homogenising device. In addition to the cross-section of the optical fibres 42; 46 the cross section of the input area 40; 44 of the optical waveguide is also depicted in FIG. 2 and FIG. 3. In FIG. 2 the optical fibres 42 are bundled and arranged in a square array with a basically rectangular shape in order to meet the rectangular shape of the input area 40 of the optical waveguide. However the optical fibres 42 can be rearranged in any arbitrary configuration to match the shape of another input area. In case the optical waveguide of the light homogenising device has a constant rectangular cross-section (shape of input area = shape of output area) the arrangement of the optical fibres 42 already matches a targeted aspect ratio for a light distribution device with a specified width and height which can for example be used in an optical system for a railway traffic light luminaire. In this case the beam shaping is realized at the input area 40; 44 of the optical waveguide. In case the shape of input area differs from the shape of the output area (e.g. if a tapered waveguide is used) beam shaping takes place at the output area. In order to transmit as much light as possible from the optical fibres 42 into the input area 40 of the optical waveguide, the tail ends of the fibres 42 should be aligned precisely in parallel and have planar and polished end faces. Therefore the end faces of all fibres 42 lie in a plane parallel to the plane of the input area 40. In contrast to FIG. 2, in FIG. 3 fibres 46 are bundled and arranged in a hexagonal closed packed array.

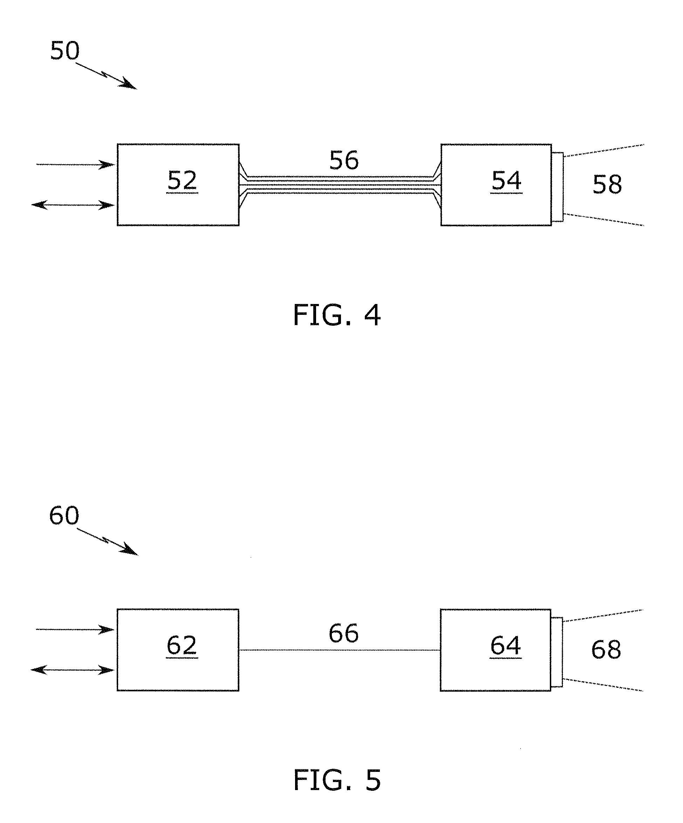

In **FIG. 4** and **FIG. 5** two different optical systems are schematically depicted. The optical system **50** in FIG. 4 is divided into two parts spatially separated and arranged in two different cabinets. The solid state light sources together with the driver and control circuit are located in a first cabinet **52.** The light homogenising device and the light distribution device are located in a second cabinet **54** from which the light **58** of the optical system 50 is distributed. Both cabinets 52 and 54 are optically connected to each other by a light collection device comprising optical fibres **56.** In the first cabinet 52 the fibres 56 are directly or with intermediate optics in between connected to the solid state light sources. The optical fibres 56 of the light collection device leave the first cabinet 52 and enter the second cabinet 54 where they are adjoined to the input area of the optical waveguide of the light homogenising device. If the optical system 50 is part of a railway traffic light, the first cabinet 52 can be located on the ground while the second cabinet 54 is located at the head of the railway traffic light. To protect the fibres 56 of the light collection device, they are bundled into one optical cable with a rugged cable coating. This optical cable can have a length up to some tens of meters. The first cabinet 52 comprising the electro-optical part of the system 50 has an electrical connection **59** for power supply and signal interfacing.

In comparison to FIG. 4 the first cabinet **62** of the optical system **60** in FIG. 5 houses the solid state light sources, the driver and control circuit and the light collection device while a second cabinet **64** houses the light distribution device. In FIG. 5 the light homogenising device comprises one optical fibre **66** which optically connects the first cabinet 62 with the second cabinet 64. Unlike to FIG. 4 in FIG. 5 only a single fibre 66 is needed for connecting the cabinets which can save production costs. In order to provide light with a homogenous luminous intensity and colour distribution, the optical fibre 66 has a minimum length depending on the optical parameters and the specification of the optical system 60. In case the minimum length exceeds the distance between the two cabinets 62 and 64 a part of the optical fibre 66 can be rolled up and placed in the first 62 and/or the second cabinet 64. In FIG. 4 and FIG. 5 an electro-optical part and a purely optical part are located in different cabinets and separated by at least one optical fibre. In addition to the components mentioned above the electro optical part can also comprise circuits for communication, power supply, thermal management as well as controlling and driving circuits of the solid state light sources. The electro-optical part in the first cabinet 52, 62 comprises active electrical components like solid state light sources and semiconductor power switches which always have a limited lifetime. In contrast, the cabinets 54 and 64 only comprise passive optical components like lenses, mirrors or optical distributors which have a quite unlimited lifetime. Therefore, the second cabinet is free of maintenance. While the cabinets 52 and 62 are mounted on the ground for easy maintenance access, the cabinets 54 and 64 can be mounted at the head of the traffic light signal. Preferably all electro-optical parts of a traffic light comprising several inventive optical systems are arranged in the same cabinet to save space and costs.

The inventive optical system provides a light distribution with a specified angular luminous intensity which is independent of the number and type of solid state light sources used. By employing solid state light sources with different light colours, the optical system is able to distribute light with a homogenous light colour mixed by the different light colours of the solid state light sources.

### List of reference signs

- 10: optical system
- 12a-12e: solid state light sources
- 14: light collection device
- 14a-14e: optical fibres
- 16: light homogenising device
- 18: optical waveguide
- 18a: light input area
- 18b: light output area
- 19: main direction of propagation of the light
- 20: optical diffuser
- 22: light distribution device
- 24: collimating system
- 26: zoned distributor
- 28: protective window
- 30: traffic light luminaire
- 32: control device
- 34: light detector
- 36: optical fibre
- 38: supply and communication circuit
- 40: light input area
- 42: optical fibres
- 44: light input area
- 46: optical fibres
- 50: optical system
- 52: first cabinet
- 54: second cabinet
- 56: optical fibres
- 58: light distributed by the second cabinet
- 60: optical system
- 62: first cabinet
- 64: second cabinet
- 66: optical fibre
- 68: light distributed by the second cabinet

## Claims

1. An optical system (10; 50; 60) for use in a traffic light luminaire (30) comprising at least two solid state light sources (12a-12d) for generating light and a light distribution device (22) for distributing light incident onto the light distribution device (22) with a specified angular luminous intensity distribution,
**characterised in that**
the optical system (10; 50; 60) further comprises a light homogenising device (16) including an optical waveguide (18) for interreflecting light inside the optical waveguide (18) which enters the optical waveguide (18) through an input area (18a; 40; 44) and exits the optical waveguide (18) through an output area (18b), wherein the light generated by the at least two solid state light sources (12a-12d) is incident onto the input area (18a; 40; 44) of the optical waveguide (18) and the light exiting the light homogenising device (16) is incident onto the light distribution device (22).

2. An optical system (10; 50; 60) according to claim 1, **characterised in that** the at least two solid state light sources (12a-12d) are light emitting diodes and/or laser diodes, in particular emitting light of different colours.

3. An optical system (10; 50; 60) according to any one of the preceding claims, **characterised in that** the optical system (10; 50; 60) further comprises a light collection device (14), wherein the light collection device (14) comprises at least one optical component to direct the light generated by the at least two solid state light sources (12a-12d) to the input area (18a; 40; 44) of the optical waveguide (18) of the light homogenising device (16).

4. An optical system (10; 50; 60) according to claim 3, **characterised in that** the light collection device (14) comprises a plurality of optical fibres (14a-14d; 42; 46; 56), wherein each optical fibre (14a-14d; 42; 46; 56) is optically connected with a first end to one of the at least two solid state light sources (12a-12d) and with a second end to the input area (18a; 40; 44) of the optical waveguide (18) of the light homogenising device (16).

5. An optical system (10; 50; 60) according to any one of the preceding claims, **characterised in that** the shape of the optical waveguide (18) is configured such that the most divergent portion of the light generated by each of the at least two solid state light sources (12a-12d) entering the optical waveguide (18) through the input area (18a; 40; 44) is reflected inside the optical waveguide (18) a minimum number of times, in particular at least one time, before it exits the optical waveguide (18) through the output area (18b).

6. An optical system (10; 50; 60) according to any one of the preceding claims, **characterised in that** the light homogenising device (16) comprises at least one optical diffuser (20) placed at the output area (18b) of the optical waveguide (18).

7. An optical system according to claim 6, **characterised in that** the optical waveguide (18) is a solid waveguide and that the optical diffuser (20) is realised by a roughened surface of the output area (18b) of the optical waveguide (18).

8. An optical system (10; 50; 60) according to any one of the preceding claims, **characterised in that** the optical waveguide (18) of the light homogenising device (16) is an elongated planar or tapered optical waveguide, in particular having a rectangular cross-section, wherein the input area (18a; 40; 44) is located at a first longitudinal end and the output area (18b) is located at a second longitudinal end of the optical waveguide (18).

9. An optical system (10; 50; 60) according to claim 8, **characterised in that** the output area (18b) of the optical waveguide (18) of the light homogenising device (16) has the shape of a specified beam cross-section, in particular to replicate the shape of a light bulb filament.

10. An optical system (10; 50; 60) according to any one of the claims 1 through 6, **characterised in that** the optical waveguide (18) of the light homogenising device (16) is an optical fibre (66), wherein the input area (18a; 40; 44) is an end face at a first tail end and the output area (18b) is an end face at a second tail end of the optical fibre.

11. An optical system (10; 50; 60) according to any one of the preceding claims, **characterised in that** the at least two solid state light sources (12a-12d) are arranged in a first cabinet (52; 62) and the light distribution device is arranged in a second cabinet (54; 64) which is spatially separated from the first cabinet (52; 62), wherein an optical connection between the first cabinet (52; 62) and the second cabinet (54; 64) is established by at least one optical fibre (56; 66).

12. An optical system (10; 50; 60) according to any one of the preceding claims, **characterised in that** the light distribution device (22) comprises a collimating system (24) to collimate the light exiting the light homogenising device (16) and a zoned distributor or a structured Fresnel lens (26) or a micro structured optical plate.

13. An optical system (10; 50; 60) according to any one of the preceding claims, **characterised in that** a further solid state light source (12e) is provided, the further solid state light source (12e) generating invisible radiation, in particular infrared radiation, and that the optical system (10; 50; 60) comprises at least one optical component which absorbs the invisible radiation generated by the further solid state light source (12e).

14. A traffic light luminaire (30) comprising an optical system (10; 50; 60) according to any one of the preceding claims.

15. A traffic light luminaire (30) according to claim 14, **characterised in that** a control device (32) being adapted to simultaneously operate the solid state light sources (12a-12e) and at least one light detector (34) are provided to establish an optical feedback loop,
the at least one light detector (34) being arranged for detecting light at least at one specific location within the optical system, in particular being arranged to detect light exiting the light homogenising device (16) or the light distribution device (22), and the control device (32) being adapted to maintain a predetermined luminous intensity and/or colour of the detected light.

16. A traffic light, in particular a railway traffic light, comprising at least one traffic light luminaire (30) according to claim 14 or 15.
